# EUROPEAN PATENT APPLICATION

(11) **EP 0 849 937 A1**
(43) Date of publication of application: **24.06.1998**
(21) Application number: 97122531.3
(22) Date of filing: 19.12.1997
(51) Int. Cl.: H04N 3/15

(54) **CCD image pick-up device and image reader**

(30) Priority: 20.12.1996 JP 342229/96; 11.08.1997 JP 216632/97
(71) Applicant: SEIKO EPSON CORPORATION, Shinjuku-ku, Tokyo (JP)
(72) Inventor: Kanesaka, Yoshinori, Suwa-shi, Nagano-ken (JP)
(74) Representative: von Fischern, Bernhard, Dipl.-Ing.

(57) **Abstract**

A CCD image pick-up device comprising a plurality of CCD shift registers and a common output circuit formed integrally with output gates of the CCD shift registers, wherein the output gates of the CCD shift registers can be controlled for each color. The common output circuit multiplexes electric signals discharged into the output gates and outputs the resultant signal. In doing so, the linearity characteristic difference, when charges accumulated in a plurality of CCD shift registers are output, is eliminated and high-quality images can be provided.

## Description

### BACKGROUND OF THE INVENTION

### Field of the Invention

This invention relates to a charge coupled device (CCD) image pick-up device having CCDs with a plurality of channels, such as a color CCD image pick-up device, and an image reader using the CCD image pick-up device.

### Description of Related Art

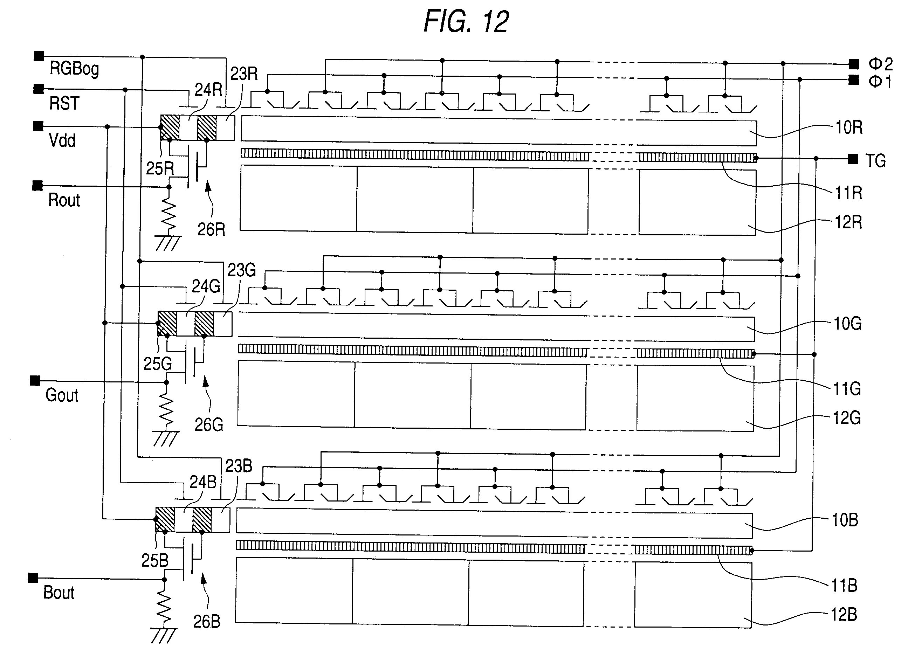

A color CCD image pick-up device is frequently used in an image reader, such as an image scanner. A conventional example of this kind of color CCD image pick-up device will be discussed with reference to Figure 12. The color CCD image pick-up device comprises CCD shift registers 10R, 10G, and 10B (10 when the registers are described collectively), transfer gates 11R, 11G, and 11B (11 when the transfer gates are described collectively), and color photodiodes 12R, 12G, and 12B (12 when the photodiodes are described collectively) provided in correspondence with the three colors red (R), green (G), and blue (B). It also comprises a plurality of electrodes for giving potential differences for charge transfer to the CCD shift registers 10, wherein charges accumulated in the photodiodes 12 from light energy are transferred to the corresponding CCD shift registers 10 through the corresponding transfer gates 11. Connected to the output sides of the CCD shift registers 10 are output circuits comprising output gates 23R, 23G, and 23B (23 when the output gates are described collectively), floating sources 24R, 24G, and 24B (24 when the floating sources are described collectively), reset gates 25R, 25G, and 25B (25 when the reset gates are described collectively), and preamplifiers (FETs) 26R, 26G, and 26B (26 when the preamplifiers are described collectively) corresponding to the three colors, respectively. The output circuits output electric signals corresponding to charges of the three colors.

In Figure 12, φ1 and φ2 are potential control signals for giving potential differences to move accumulated charges of the CCD shift registers 10 to the output circuits in a bucket brigade manner, TG is a transfer gate signal for determining the transfer gate 11 operation timing, RGBog is a conduction control signal for controlling enabling/disenabling of the output gates 23, RST is a reset signal for controlling enabling/disenabling of the reset gates 25, Vdd is a bias, and Rout, Gout, and Bout are electric signals output for red, green, and blue, respectively.

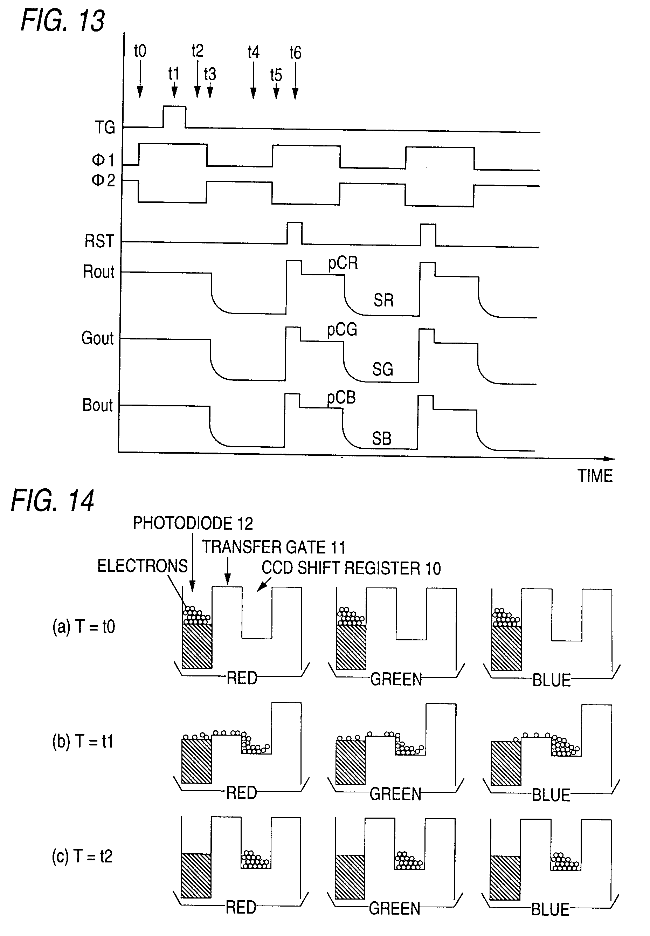

Figure 13 is an operation timing chart of the color CCD image pick-up device shown in Figure 12. It shows the state transition of the transfer gate signal TG, the potential control signals φ1 and φ2, the reset signal RST, and the electric signals Rout, Gout, and Bout.

In Figure 13, pCR, pCG, and pCB are precharge components of the electric signals of the three colors (pixels) output from the color CCD image pick-up device and SR, SG, and SB are signal components of the colors.

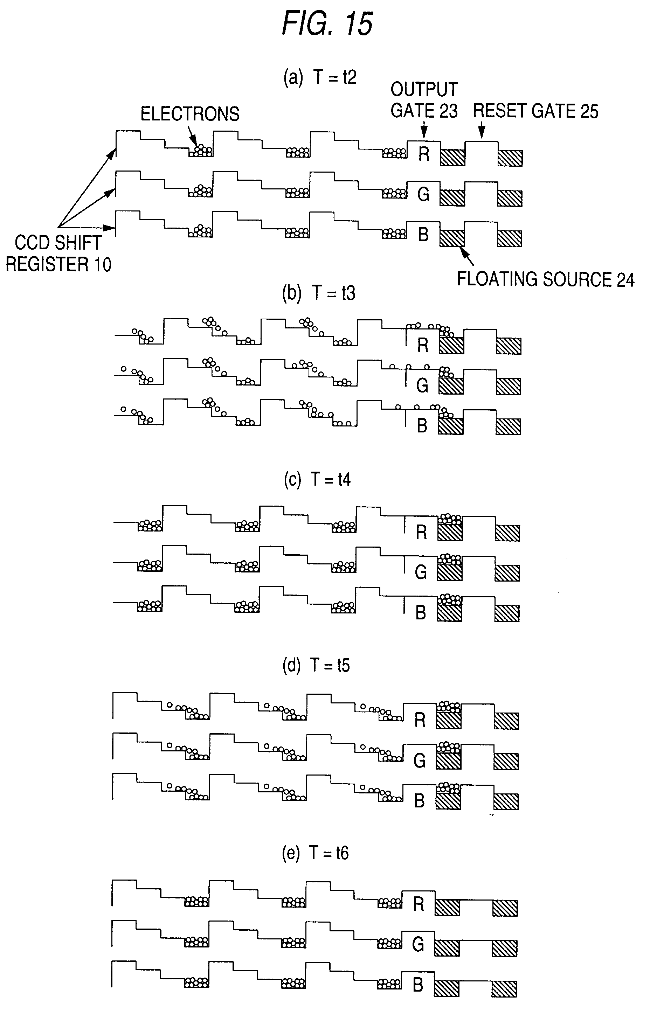

Figures 14 (a)-(c) show a charge accumulation process by potential change among the photodiodes 12, the transfer gates 11, and the CCD shift registers 10. Figures 15 (a)-(e) show a charge transfer process by potential change among the CCD shift registers 10, the output gates 23, the floating sources 24, and the reset gates 25 for the three colors. Each output gate 23 is fixed high. Electrons move more easily when the potentials in the CCD shift registers 10 are set low. This means that when a high voltage is applied to the electrode, the potential becomes low and when a low voltage is applied, the potential becomes high.

Next, a process in the color CCD image pick-up device until charges generated by light energy are output to the outside as electric signals will be discussed.

First, the state of the color CCD image pick-up device at each time T t0 through t6 shown at the top stage of Figure 13 will be discussed with reference to Figures 14 and 15.

Figure 14 (a) shows a state when time T is t0, wherein charges generated by light energy are accumulated in photodiodes 12. At this time, the transfer gate signal TG is low, thus the transfer gates 11 are disenabled. No charges remain in the CCD shift registers 10 because charges had previously been transferred therefrom.

Figure 14 (b) shows a state when time T is t1, wherein the transfer gate signal TG goes high and the transfer gates 11 have been just enabled. At this time, all the charges accumulated in photodiodes 12 flow into the CCD shift registers 10 in unison.

Figure 14 (c) shows a state when time T is t2, wherein all charges from photodiodes 12 have flown into the CCD shift registers 10, the transfer gate signal TG goes low, and the transfer gates 11 are disenabled. This means that transfer of the charges that had been accumulated in photodiodes 12 to the CCD shift registers 10 is complete.

Figures 15 (a) to (e) show how the charges transferred to the CCD shift registers from photodiodes 12 are transferred to the output circuits in a bucket brigade manner.

Figure 15 (a) shows a state when time T is t2, wherein all charges in photodiodes 12 are transferred to the CCD shift registers 10. At this time, the potential control signals φ1 and φ2 are high and low, respectively, and the reset signal RST is low. The charges collect at the lowest places.

Figure 15 (b) shows a state when time T is t3. At this time, the potential control signal φ1 starts to make a high to low transition and the potential control signal φ2 starts to make a low to high transition. The potential of each CCD shift register 10 moves in the output circuit direction by a half pixel and the charges move in a more stable potential direction (output circuit direction by a half pixel) accordingly. Because the potentials of the output gates 23 are fixed high, the charges at the final stage for the three colors flow into the floating sources 24.

Figure 15 (c) shows a state when time T is t4, wherein all the charges have been moved. At this time, the floating sources 24 are connected to gates of the FETs 26 and the FET 26 source follower circuits output the electric signals (Rout, Gout, and Bout) proportional to the charges accumulated in the floating sources 24. At this time, the electric signals of red, green, and blue are output at the same time, as shown in Figure 13.

Figure 15 (d) shows a state when time T is t5, wherein the potential control signal φ1 starts to make a low to high transition and the potential control signal φ2 starts to make a high to low transition. At this time, the potential of each CCD shift register 10 moves in the output circuit direction by a half pixel and the charges move in a more stable potential direction (output circuit direction by a half pixel) accordingly.

Figure 15 (e) shows a state when time T is t6, wherein the reset signal RST makes a low to high transition, enabling the reset gates 25 for initializing (resetting) the charges in the floating sources 24.

Thus, all the red, green, and blue signals of the first pixel have been output and one cycle has been executed at the times t2-t6. This means that the charge transfer for one pixel is complete on the CCD shift registers. After this, the electric signals corresponding to red, green, and blue pixels are output at the same time separately from three terminals in synchronization with the potential control signals φ1 and φ2 and the reset signal RST.

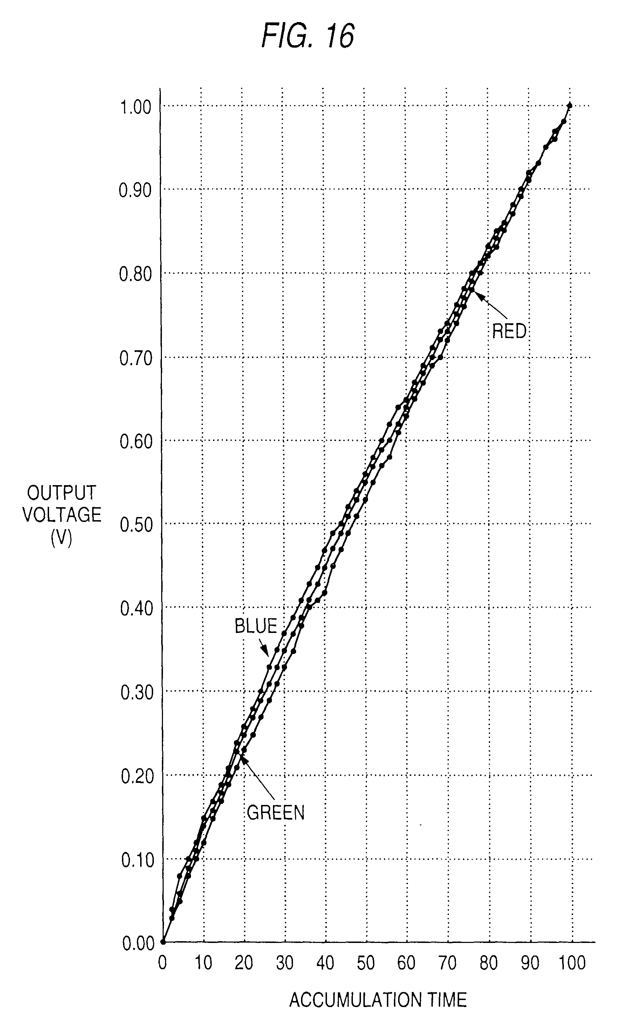

Figure 16 shows the input/output characteristics (measurement values) of electric signals for red, green, and blue provided from the color CCD image pick-up device as shown in Figure 12. In Figure 16, the accumulation time is indicated on the horizontal axis and red, green, and blue signal voltages are indicated on the vertical axis. The accumulation time refers to the amount of time light is applied time to the photodiodes. If a light source of a given light quantity is used, incidence angle energy can be controlled according to the accumulation time. The accumulation time is indicated in relative values because the light quantity of a light source and the light conversion efficiency of a photodiode vary from one color to another. As seen in Figure 16, the input/output characteristics vary from one color to another because three separate output circuits are provided in a one-to-one correspondence with the three colors. By taking an extremely general color CCD image pick-up device as an example, the maximum output value is 1000 mV and the maximum value of the difference between color output voltages for the same input is about 50 mV.

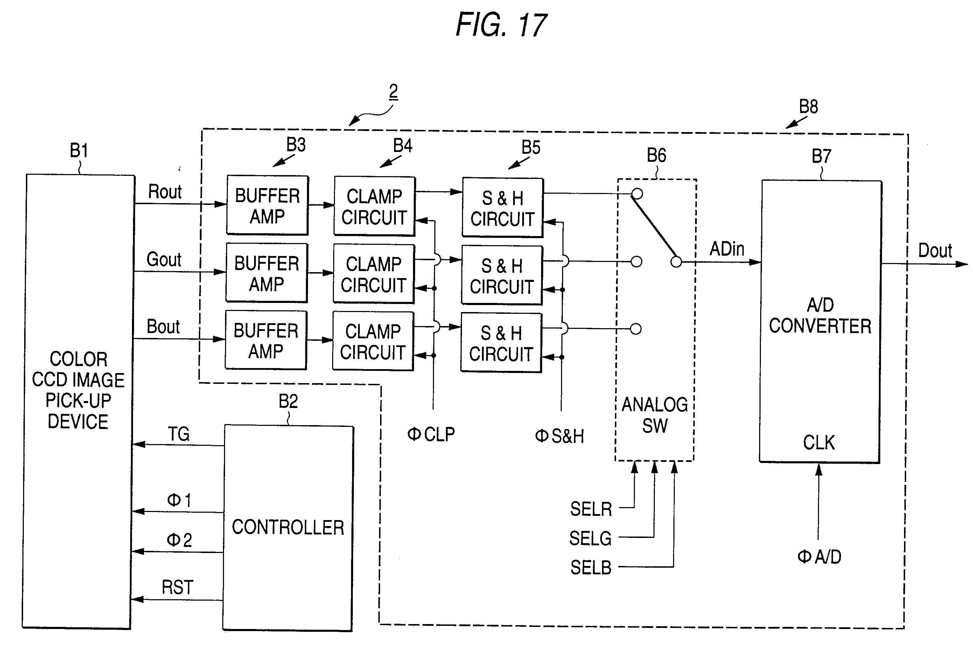

Next, an example of a conventional image reader will be discussed with reference to Figure 17.

The image reader 2 comprises a color CCD image pick-up device B1 of the configuration shown in Figure 12, a controller B2 for controlling the color CCD image pick-up device B1, and an image conversion circuit B8. The controller B2 is a unit for controlling the operation of the color CCD image pick-up device B1 by the potential control signals φ1 and φ2, the transfer gate signal TG, and the reset signal RST. The image conversion circuit consists of three buffer amplifiers B3, three clamp circuits B4, three sample and hold (S&H) circuits B5 provided in a one-to-one correspondence with the three colors, an analog switch B6 for selectively switching output of the sample and hold circuits B5 and outputting the selected signal, and an analog-digital converter (A/D converter) B7 for converting the output of the analog switch B6 into a digital signal.

The image conversion circuit B8 clamps precharge components pcR, pcG, and pcB (precharge parts) of electric signals corresponding to pixels of the three colors output from the color CCD image pick-up device B1 at a given potential, then samples and holds signal components SR, SG, and SB (signal parts). The sampled and held electric signals are switched in the order of red, green, and blue by the analog switch B6 for each pixel, and are input to the A/D converter in a time-division manner in order to use only one A/D converter, which is an expensive component.

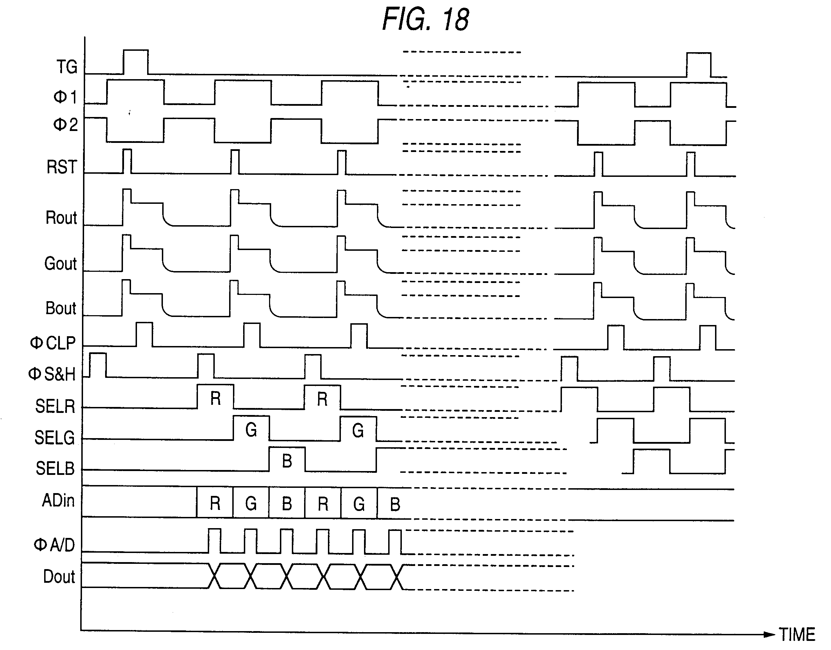

Figure 18 shows the operation timing of the image reader.

In Figure 18, TG, φ1, φ2, RST, Rout, Gout, and Bout are the same signals as those shown in Figure 13. φCLP is a signal for clamping the precharge parts of the output signals of the color CCD image pick-up device B1 at a given potential in the clamp circuits B4 when the φCLP signal is high. φS&H (sample and hold) is a signal for sampling and holding the signal parts of the color CCD image pick-up device B1 in the sample & hold circuits BS when the φS&H signal is high. The clamping and sampling and holding techniques are called correlative double sampling method and often used for noise reduction. SELR, SELG, and SELB are switch signals for controlling on/off of the analog switch B6 for selecting electric signals for red, green, and blue; when a signal is high, its corresponding color electric signal can be selected. In this example, the analog switch B6 is turned on in the order of red, green, and blue. The electric signals passed through the analog switch B6 are input to the A/D converter B7 for analog to digital conversion as described below.

The A/D converter B7 samples a signal ADin input to an analog input section while clock signal φA/D is high, and holds the signal ADin while the clock signal φA/D is low. The A/D converter B7 converts the held analog signal into a digital signal Dout in synchronization with the rising edge of the clock signal φA/D in the next cycle and outputs the digital signal Dout from a digital output section.

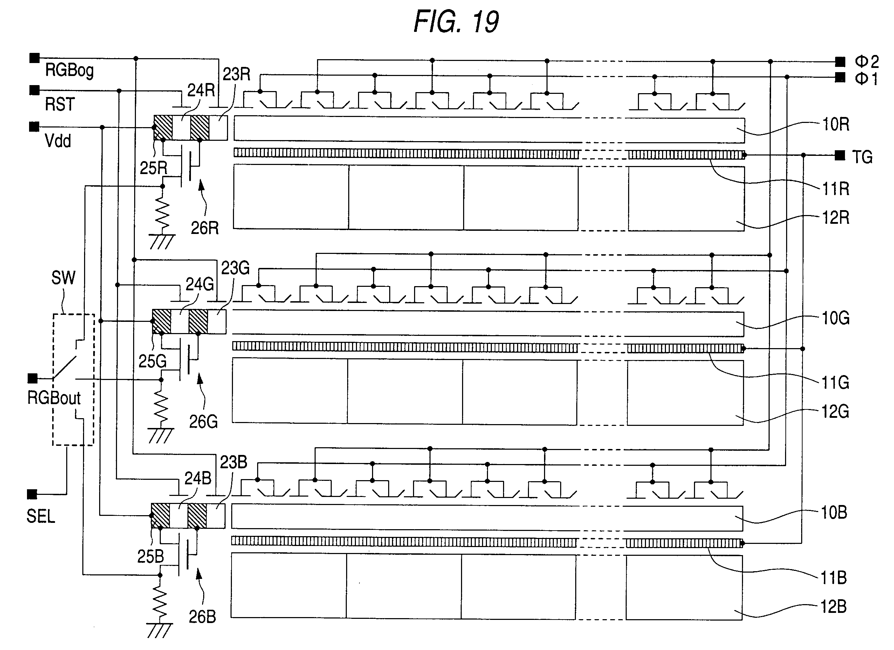

Figure 19 is a configuration illustration of another conventional color CCD image pick-up device.

The color CCD image pick-up device differs from that shown in Figure 12 in that an analog switch SW is placed following output circuits for electric signals of the three colors red, green, and blue. Analog switch SW switches the red, green, and blue electric signals for each line in synchronization with potential control signals φ1 and φ2 and a reset signal RST and selectively outputs based on a selection signal SEL from one output terminal RGBout. After 1-line red signal is read, 1-line green signal is read, then 1-line blue signal is read. The read electric signals undergo correlative double sampling which is described later and are then converted into digital signals. Because color electric signals are selectively output in the color CCD image pick-up device thus configured, an image reader using the color CCD image pick-up device need not be provided with buffer amplifiers and clamp circuits in a one-to-one correspondence with the three colors as shown in Figure 17, thereby simplifying the circuit configuration.

As described above, in the conventional color CCD image pick-up device, electric signals for red, green, and blue are output through output circuits of different channels. Normally, an FET 26 is placed at the final stage of each output circuit. However, but the input/output linearity characteristics vary depending on characteristic variations of the FETs 26 (see Figure 16). Thus, the channels may get out of level balance, leading to a failure in grey balance when later stage processing is performed. Such a problem commonly occurs in CCD image pick-up devices using CCDs with a plurality of channels, regardless of color or monochrome devices.

The conventional image reader passes the electric signals output from the CCD image pick-up device through the clamp circuits and the sample and hold circuits and switches the signals by the analog switch for input to the A/D converter. Thus, another problem also arises in that switching noise occurs and becomes pronounced when high-speed processing is performed.

It is an object of the invention to provide an improved CCD image pick-up device that can eliminate the linearity characteristic difference when charges accumulated in a plurality of CCD shift registers are output.

It is another object of the invention to provide an image reader for suppressing the occurrence of noise and providing high-quality images.

### SUMMARY OF THE INVENTION

To accomplish the first object of the invention, a CCD image pick-up device has been developed that comprises a plurality of CCD shift registers for discharging electric signals output from light receiving elements placed side by side in a row into output gates of the CCD shift registers in batch, and a common output circuit formed integrally with the output gates of the CCD shift registers for multiplexing the electric signals discharged into the output gates and outputting the resultant signal. The common output circuit comprises a single charge-voltage conversion section for converting charges discharged into the output gates of the CCD shift registers into voltage in sequence and a single reset gate for resetting the charges accumulated in the output gates. Thus, the problem of the linearity characteristic difference when charges accumulated in a plurality of CCD shift registers are output is eliminated.

To accomplish the second object of the invention, an image reader has been developed that comprises the CCD image pick-up device of the invention and control means for controlling drive of the light receiving elements of the CCD shift registers at separate and different timings, performing conduction control of the output gates and the common output circuit at common timing, and performing reset control to form precharge components in each multiplexed electric signal output from the common output circuit by the conduction control. The control means may control the driving of the light receiving elements of the CCD shift registers at common timing and perform conduction control of the output gates and the common output circuit at separate and different timings. In doing so, the analog switch, which is indispensable in the conventional image reader, becomes unnecessary. Thus, switching noise is suppressed and the quality of images output from the image reader can be improved markedly as compared with the image quality of the conventional image reader.

To further accomplish the second object of the invention, according to another aspect of the invention, the image reader comprises the CCD image pick-up device of the invention and an image conversion circuit for converting the multiplexed electric signal output from the common output circuit into image information. The image conversion circuit comprises an electronic circuit for converting each electric signal into a digital signal representing a difference value between precharge and signal components. According to the configuration, the number of image conversion circuit parts can be decreased, as compared with the conventional image reader, reducing the cost of the image reader.

### BRIEF DESCRIPTION OF THE DRAWINGS

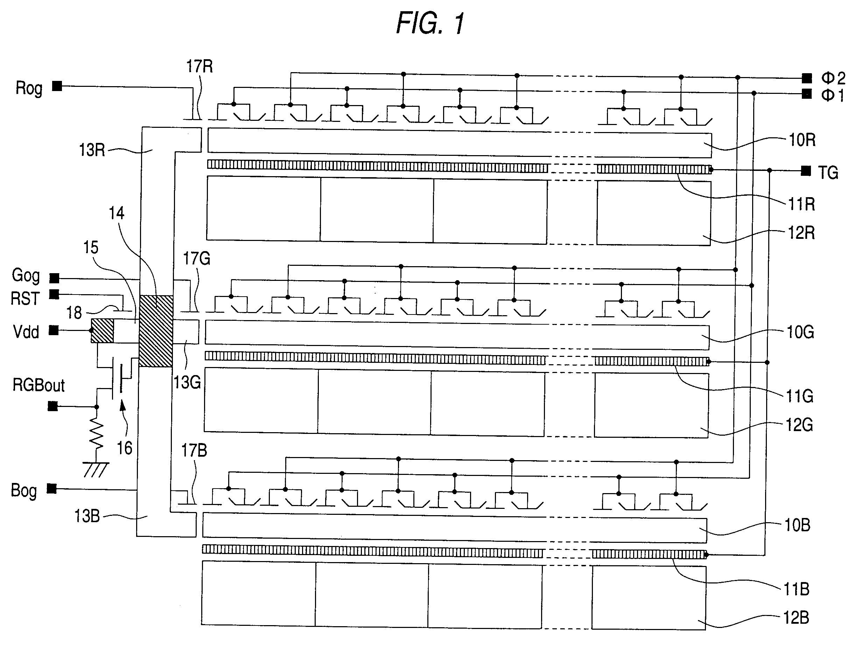

Figure 1 is a configuration illustration of a color CCD image pick-up device according to the present invention.

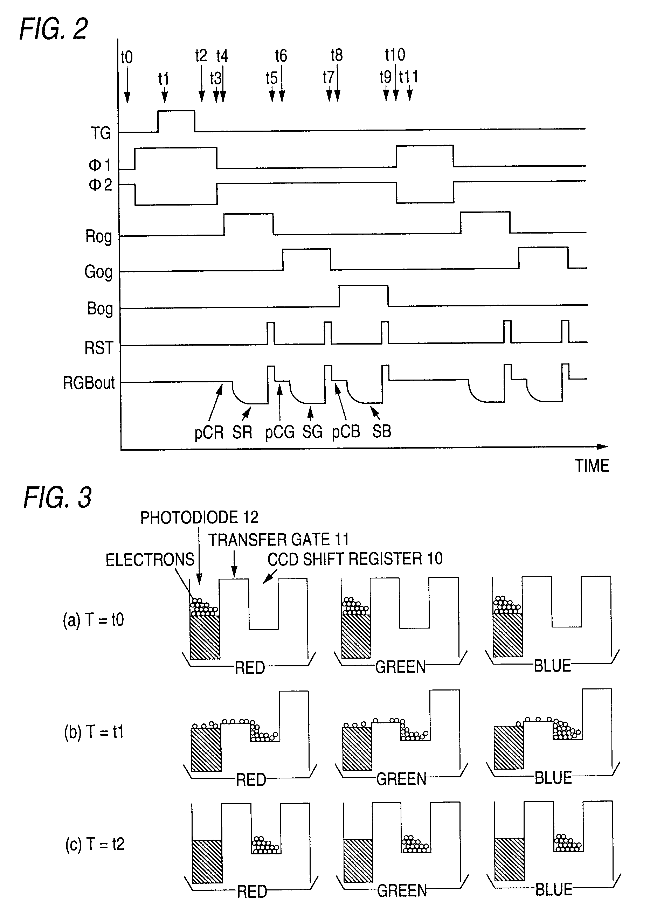

Figure 2 is an operation timing chart of the color CCD image pick-up device.

Figures 3 (a)-(c) are illustrations showing how charges are accumulated when time T = t0, t1, and t2 in the color CCD image pick-up device.

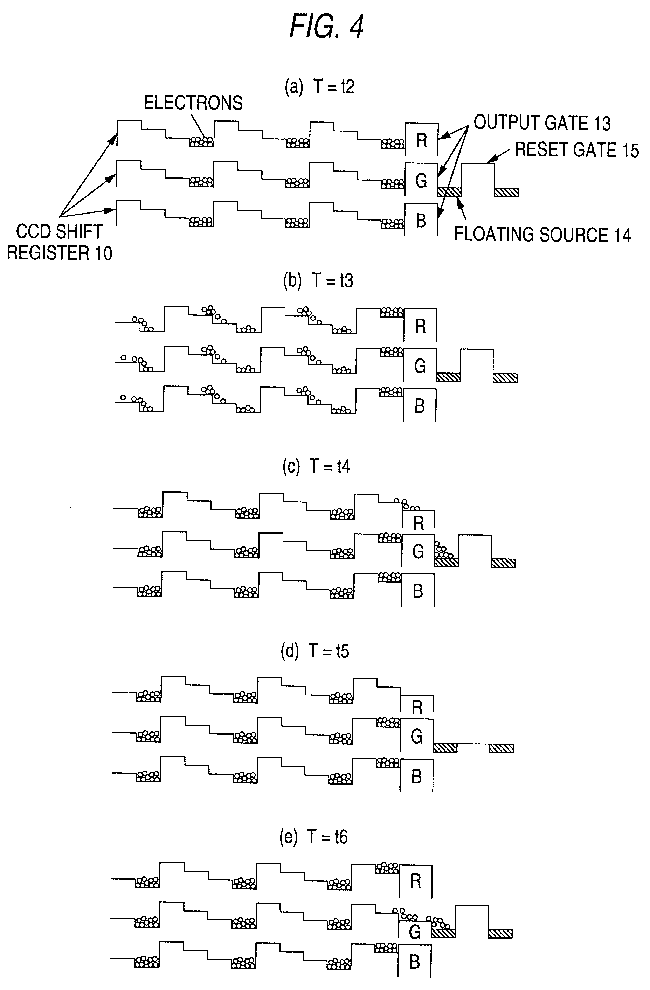

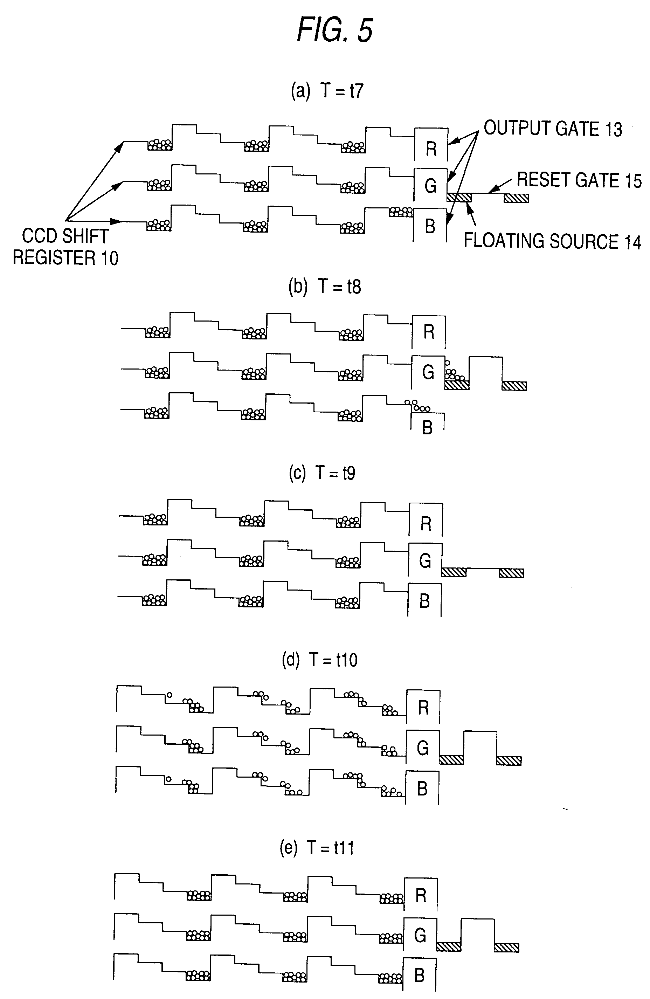

Figures 4 (a)-(e) and 5 (a)-(e) are illustrations showing how charges are transferred when time T = t2-t11 in the color CCD image pick-up device.

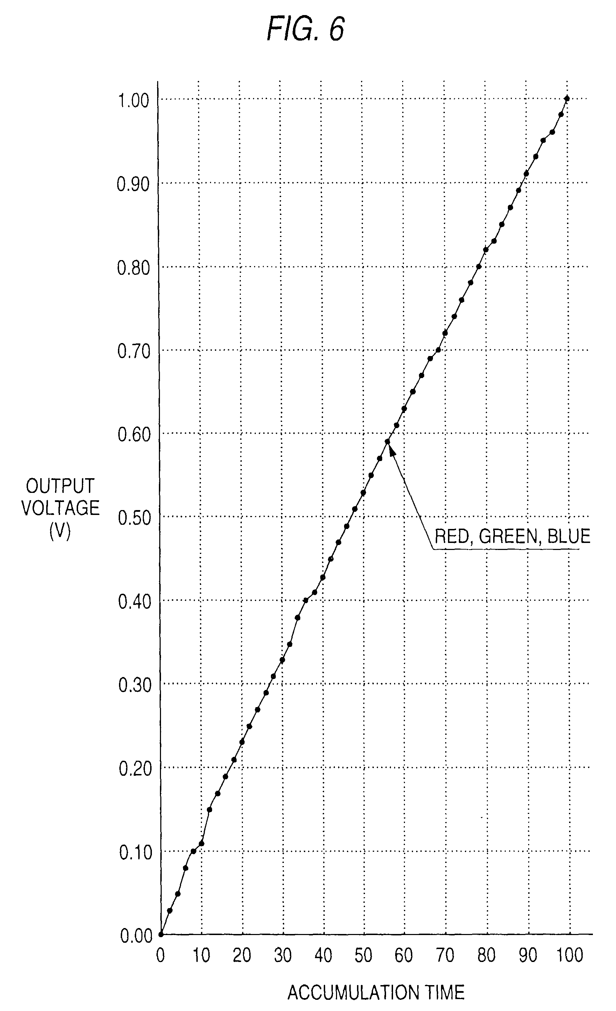

Figure 6 is an input/output characteristic chart of the color CCD image pick-up device.

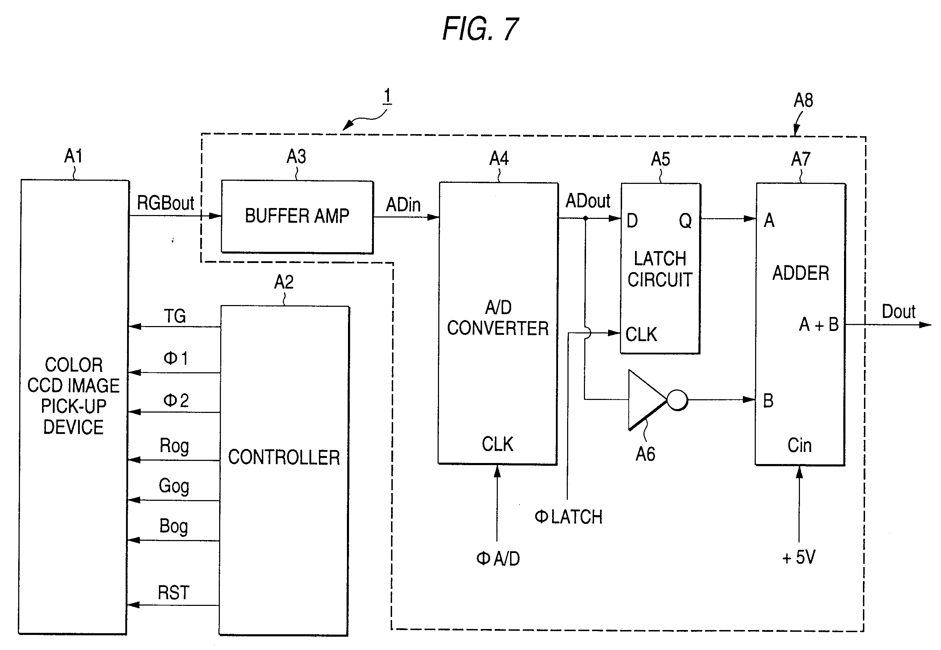

Figure 7 is a block diagram of an image conversion circuit contained in an image reader of the invention.

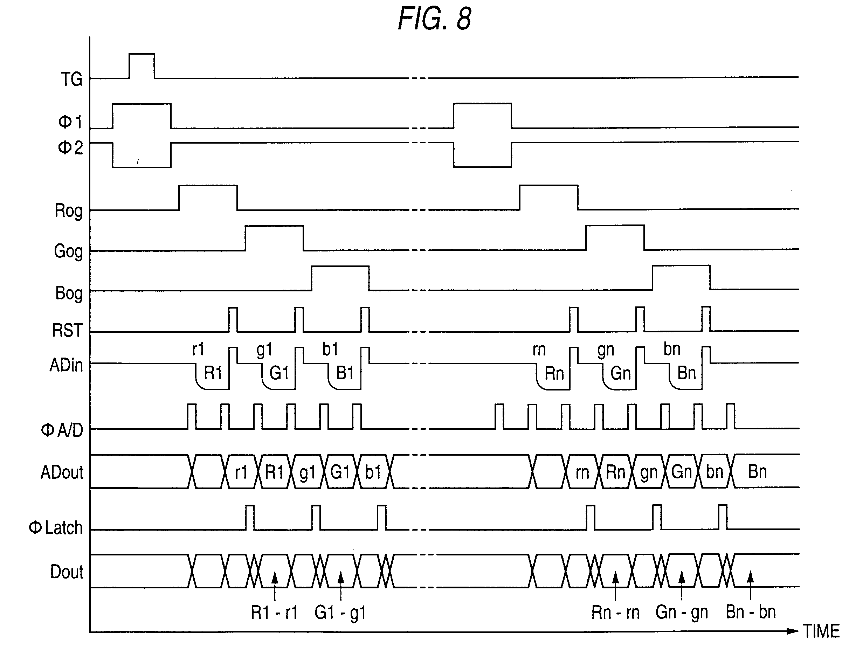

Figure 8 is an operation timing chart of the image reader.

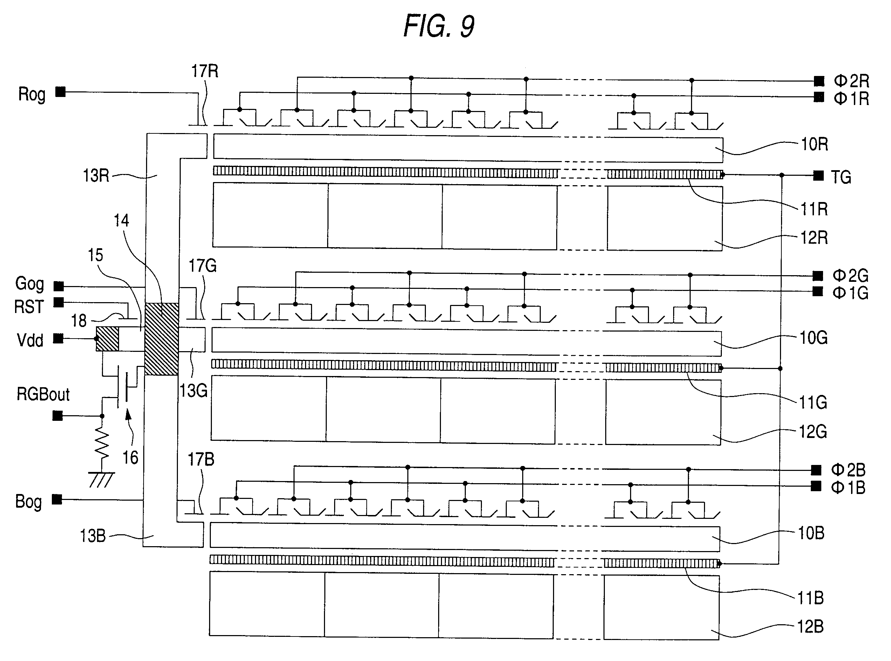

Figure 9 is a configuration illustration showing an example of a color CCD image pick-up device according to another embodiment of the invention.

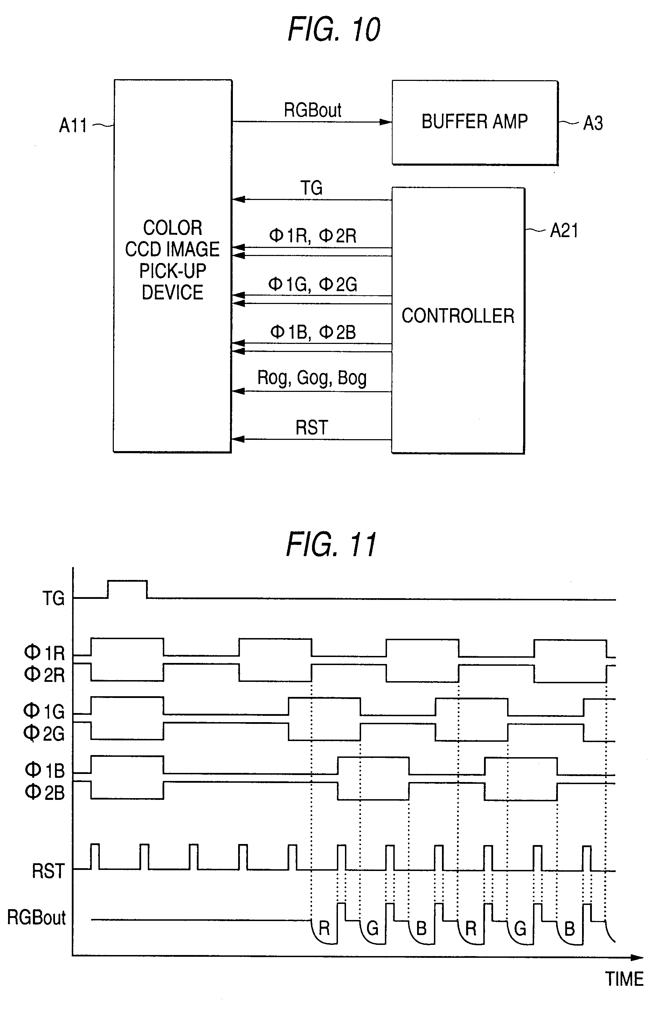

Figure 10 is a block diagram of the main part of an image conversion circuit contained in the image reader.

Figure 11 is an operation timing chart of the color CCD image pick-up device.

Figure 12 is a configuration illustration showing an example of a conventional color CCD image pick-up device.

Figure 13 is an operation timing chart of the conventional color CCD image pick-up device.

Figures 14 (a)-(c) are illustrations showing how charges are accumulated when time T = t0, t1, and t2 in the conventional color CCD image pick-up device.

Figures 15 (a)-(e) are illustrations showing how charges are transferred when time T= t2, t3, t4, t5, and t6 in the conventional color CCD image pick-up device.

Figure 16 is an input/output characteristic chart of the conventional color CCD image pick-up device.

Figure 17 is a block diagram of an image conversion circuit contained in a conventional image reader.

Figure 18 is an operation timing chart of the conventional image reader.

Figure 19 is a configuration illustration of another conventional color CCD image pick-up device.

### DETAILED DESCRIPTION OF THE PREFERRED EMBODIMENT

Referring now to Figures 1-6, an embodiment of a CCD image pick-up device of the invention will be discussed. In the embodiment, an example that applies the invention to a color CCD image pick-up device will be discussed. Components identical with those previously described with reference to Figure 12 are denoted by the same reference numerals in Figure 1.

As shown in Figure 1, the color CCD image pick-up device comprises CCD shift registers 10, photodiodes 12 for generating charges (here, electrons) in an amount proportional to received light energy, transfer gates 11 for transferring charges accumulated in the photodiodes 12 to the CCD shift registers 10, output gates 13R, 13G, and 13B (13 when the output gates are described collectively) for transferring charges transferred in a bucket brigade manner by the CCD shift registers to the output sides, a floating source 14 of a preamplifier input section, a reset gate 15 for restoring the charges flowing into the floating source 14 to the initial state, and a source follower type preamplifier (FET) 16 for outputting the electric signal of the floating source 14 (here, signal voltage for each pixel) to the outside.

The three CCD shift registers 10, the three transfer gates 11, the three photodiodes 12, and the three output gates 13 are provided in a one-to-one correspondence with the three colors red, green, and blue. On the other hand, the floating source 14, the reset gate 15, and the FET 16, which will be hereinafter collectively referred to as common output circuit, are common to red, green, and blue.

Control signals input to the color CCD image pick-up device are described below.

First, potential control signals φ1 and φ2, common to the three colors, that give potentials to send out charges in a bucket brigade manner in sequence, are input to input electrodes of the CCD shift registers 10, and a transfer gate signal TG, common to all colors, is input to electrodes of the transfer gates 11. The potential control signals φ1 and φ2 and the electrodes of the transfer gates 11 may be provided for each color. Conduction control signals (output gate signals) Rog, Gog, and Bog that separately adjust potentials and perform conduction control from the outside, are input to the output gates 13R, 13G, and 13B, respectively, through input electrodes 17R, 17G, and 17B (17 when the input electrodes are described collectively). A reset signal RST is input to the reset gate 15 through a common reset electrode 18.

Figure 2 is an operation timing chart of the color CCD image pick-up device and shows the state transition of the transfer gate signal TG, the potential control signals φ1 and φ2, the output gate signals Rog, Gog, and Bog, the reset signal RST, and the output electric signal RGBout. Figures 3 (a)-(c) show a charge accumulation process by potential change among the photodiodes 12, the transfer gates 11, and the CCD shift registers 10. Figures 4 (a)-(e) and Figures 5 (a)-(e) show a charge transfer process by potential change among the CCD shift registers 10, the output gates 13, the floating source 14, and the reset gate 15 for three pixels. Electrons are shown as small circles in the figures. Figures 3-5 show three channels of red, green, and blue. Electrons move more easily when the potentials are made low. This means that when a high voltage is applied to the electrode, the potential becomes low and when a low voltage is applied, the potential becomes high.

Next, a process of outputting charges generated by light energy as electric signals in the color CCD image pick-up device of the embodiment will be discussed. First, the operation at each time T t0 through t11 shown at the top stage of Figure 2 will be discussed.

Figure 3 (a) shows a state when time T is t0, wherein charges are accumulated in photodiodes 12. At this time, the transfer gate signal TG is low and the transfer gates 11 are disenabled. No charges remain in the CCD shift registers 10 because charges had previously been transferred therefrom.

Figure 3 (b) shows a state when time T is t1, wherein the transfer gate signal TG goes high and the transfer gates 11 have been just enabled. In this state, the charges accumulated in photodiodes 12 flow into the CCD shift registers 10.

Figure 3 (c) shows a state when time T is t2, wherein all charges in photodiodes 12 have been transferred to the CCD shift registers 10.

Figures 4 and 5 show how the charges transferred to the CCD shift registers 10 from photodiodes 12 are transferred to the common output circuit in a bucket brigade manner.

First, Figure 4 (a) shows a state when time T is t2, wherein all charges in photodiodes 12 have been just transferred to the CCD shift registers 10. At this time, the potential control signals φ1 and φ2 are high and low, respectively, the output gate signals Rog, Gog, and Bog are low, and the reset signal RST is low. The charges collect at the lowest places.

Figure 4 (b) shows a state when time T is t3. At this point in time, the potential control signal φ1 starts to make a high to low transition and the potential control signal φ2 starts to make a low to high transition. Here, the potential of each CCD shift register 10 moves in the common output circuit direction by a half pixel and the charges move in a more stable potential direction (common output circuit direction by a half pixel) accordingly.

Figure 4 (c) shows a state when time T is t4, wherein the red output gate signal Rog makes a low to high transition, enabling the red output gate 13R to allow charges to flow into the floating source 14 of the stable point. The floating source 14 is connected to a gate of the FET 16 and a source follower circuit of the FET 16 outputs the red electric signal (signal voltage), proportional to the charge amount accumulated in the floating source 14, to the outside as RGBout.

Figure 4 (d) shows a state when time T is t5, wherein the reset signal RST makes a low to high transition, enabling the reset gate 15 for initializing the red charges in the floating source 14.

Figure 4 (e) shows a state when time T is t6, wherein the green output gate signal Gog makes a low to high transition, enabling the green output gate 13G to allow charges to flow into the floating source 14 of the stable point. At this time, the green electric signal is output to the outside as RGBout.

Figure 5 (a) shows a state when time T is t7, wherein the reset signal RST makes a low to high transition, enabling the reset gate 15 for initializing the green charges in the floating source 14.

Figure 5 (b) shows a state when time T is t8, wherein the blue output gate signal Bog makes a low to high transition, enabling the blue output gate 13B to allow charges to flow into the floating source 14 of the stable point. At this time, the blue electric signal is output to the outside as RGBout.

Figure 5 (c) shows a state when time T is t9, wherein the reset signal RST makes a low to high transition, enabling the reset gate 15 for initializing the blue charges in the floating source 14. Output of all the red, green, and blue electric signals of the first pixel is now complete.

Figure 5 (d) shows a state when time T is t10, wherein the potential control signal φ1 has just made a low to high transition and the potential control signal φ2 has just made a high to low transition. At this point in time, the charges start to move in the common output circuit direction by a half pixel.

Figure 5 (e) shows a state when time T is t11, wherein one cycle from t2 is executed and the charge transfer for one pixel is complete on the CCD shift registers 10. After this, the cycle is repeated for sending charges for red, green, and blue pixels one pixel at a time to the common output circuit for outputting multiplexed electric signal RGBout to the outside is repeated.

Figure 6 is an input/output characteristic chart (measurement values) of the electric signal RGBout. In the figure, the accumulation time is indicated on the horizontal axis and red, green, and blue signal voltages are indicated on the vertical axis, as in Figure 16, which shows the characteristics of the conventional product. As seen in Figure 6, a common output circuit is provided, therefore the input/output characteristics for the three colors match.

Thus, the color CCD image pick-up device converts signal charges transferred from a plurality of CCD shift registers 10 into an electric signal and outputs the resultant signal through the common output circuit to the outside, so that the linearity difference problem that occurs in the conventional color CCD image pick-up device does not arise at all. Therefore, the red, green, and blue colors do not get out of balance.

Next, an image reader will be discussed with reference to Figures 7 and 8.

The image reader 1 comprises a color CCD image pick-up device A1 of the configuration shown in Figure 1 , a controller A2 for controlling the color CCD image pick-up device A1, and an image conversion circuit A8. The controller A2 controls the operation of the color CCD image pick-up device A1 by the potential control signals φ1 and φ2, the transfer gate signal TG, the output gate signals Rog, Gog, and Bog, and the reset signal RST.

The image conversion circuit A8 comprises a buffer amplifier A3 for performing impedance conversion and polarity inversion of the electric signal RGBout output from the color CCD image pick-up device A1, an A/D converter A4 for converting an output signal of the buffer amplifier A3 into a digital signal, a latch circuit A5 for latching the digital signal, an inverter A6, and an adder A7.

The A/D converter A4 samples an analog signal ADin input to an analog section while clock signal φA/D is high, and holds the signal ADin while the clock signal φA/D is low. The A/D converter A4 converts the held analog signal into a digital signal ADout in synchronization with the rising edge of the clock signal φA/D in the next cycle and outputs the digital signal Dout from a digital output section. The A/D conversion portion outputs precharge parts pCR, pCG, and pCB and signal parts SR, SG, and SB. The digital signal of the precharge parts pCR, pCG, and pCB is temporarily stored in the latch circuit A5.

The latch circuit A5 can output an input signal intact while a latch control signal φLatch is high, and can hold the value when the signal φLatch is high while φLatch is low. The inversion output of the latch circuit is input to the A input of the adder A7 and the output of the A/D converter A4, through an inverter A6, is input to the B input of the adder A7. A high signal is input to carry input (Cin) of the adder A7. Because the electric signal RGBout output from the color CCD image pick-up device A1 is inverted in polarity by the buffer amplifier A3,the adder A7 outputs a signal resulting from subtracting the corresponding precharge parts pCR, pCG, and pCB from the signal parts SR, SG, and SB, providing a difference signal Dout for each color.

The image reader 1 shown in Figure 7 converts the precharge parts pCR, pCG, and pCB and the signal parts SR, SG, and SB of the electric signal RGBout from the color CCD image pick-up device A1 into digital signals, then finds the difference therebetween. However, the difference therebetween may also be found in the analog signal form, then converted into digital form.

The image reader eliminates the need for the analog switch which is indispensable in the conventional image reader. Thus, if high-speed processing is performed, no noise occurs and high-quality image signals can be provided. The number of image conversion circuit parts can also be decreased as compared with the conventional image reader, so that an inexpensive circuit can also be formed. Therefore, a high-speed, high-quality, and low-price image reader can be provided.

Next, another CCD image pick-up device of the invention will be discussed with reference to Figures 9-11. A color CCD image pick-up device will also be discussed. Components identical with those previously described with reference to Figures 1 and 12 are denoted by the same reference numerals in Figure 9. In the embodiment, potential control signals φ1R and φ2R, φ1G and φ2G, and φ1B and φ2B are input to input electrodes of CCD shift registers 10R, 10G, and 10B, respectively. However, a transfer gate signal TG common to the colors is input to electrodes of transfer gates 11. The electrodes of the transfer gates 11 may be provided in a one-to-one correspondence with the three colors.

As in the color CCD image pick-up device shown in Figure 1, output gates 13R, 13G, and 13B are formed with input electrodes 17R, 17G, and 17B to which output gate signals Rog, Gog, and Bog are supplied. In the embodiment, the output gate signals Rog, Gog, and Bog are set at levels at which conduction with the transfer gates 11 is always turned on. A given-cycle reset signal RST is input to a reset gate 15 through a common reset electrode 18. The signals φ1R, φ2R, φ1G, φ2G, φ1B, φ2B, TG, Rog, Gog, and Bog are supplied from a controller A21, as shown in Figure 10. In the figure, numeral A11 is the color CCD image pick-up device described here.

Figure 11 shows the operation timing of the color CCD image pick-up device A11.

All CCD shift registers 10 enter the operation state when transfer gate signal TG goes high and then start to accumulate corresponding color electric signals separately with a delay of a given time. The output gates 13 are always in conduction with a common output circuit. After accumulation of the electric signals is completed, the color electric signals R (red), G (green), and B (blue) are discharged into the common output circuit, in order, through the CCD shift registers 10 and the output gates 13. The electric signals R, G, and B are multiplexed in the common output circuit, in order, and the resultant signal is sent to an image reader using the color CCD image pick-up device as one electric signal RGBOut. Therefore, as with the first embodiment, the image reader eliminates the need for an analog switch. Thus, if high-speed processing is performed, no noise occurs and high-quality image signals can be provided.

Unlike the conventional example in which the charges in the CCD shift registers 10 are all transferred to the stage immediately preceding the output gates in union and then the output gates are enabled in sequence, the electric signals are discharged at regular intervals matching the cycle of the reset signal RST in the embodiment. Thus, the electric signals can be read at the maximum transfer rate allowed for the CCD shift registers and the multiplexed electric signal can be output at shorter time intervals than those in the color CCD image pick-up device shown in Figure 1.

As seen from the comparison with Figure 2, the red potential control signals φ1R and φ2R and the green potential control signals φ1G and φ2G, the green potential control signals φ1G and φ2G and the blue potential control signals φ1B and φ2B, and the blue potential control signals φ1B and φ2B and the red potential control signals φ1R and φ2R are generated cyclically at a timing at which one is activated with a delay of a one-third cycle of the other. Thus, control of each CCD shift register 10 is made simpler than that of the first embodiment and the operation also becomes more stable. Further, the electric signals are discharged at equal time intervals from the CCD shift registers 10, so that the color CCD image pick-up device also has an advantage of suppressing the occurrence of dark current unevenness.

The invention can be applied not only to the color CCD image pick-up device, but also to a monochrome CCD image pick-up device containing a plurality of CCD shift registers.

The CCD image pick-up device of the invention does not cause the linearity characteristic difference problem when charges accumulated in a plurality of CCD shift registers are output, therefore it can be applied to general systems intended for providing high-quality images.

The image reader of the invention can be applied to an image reader such as an image scanner for suppressing noise occurrence and reading high-quality images.

## Claims

1. A CCD image pick-up device comprising:
a plurality of CCD shift registers for discharging electric signals output from light receiving elements placed side by side in a row into output gates of said CCD shift registers in batch; and
a common output circuit formed integrally with the output gates of said CCD shift registers for multiplexing the electric signals discharged into the output gates and outputting a resultant signal.

2. The CCD image pick-up device as claimed in claim 1 wherein each of said CCD shift registers comprises an input electrode of a first control signal for commonly controlling the drive of the light receiving elements and an input electrode of a second control signal for separately controlling the conduction between the output gate of said CCD shift register and said common output circuit.

3. The CCD image pick-up device as claimed in claim 1 wherein each of said CCD shift registers comprises an input electrode of a first control signal for separately controlling the drive of the light receiving elements of said CCD shift register separately and an input electrode of a second control signal for commonly controlling the conduction between the output gate of said CCD shift register and said common output circuit.

4. The CCD image pick-up device as claimed in claim 1 wherein said CCD shift registers discharge electric signals corresponding to light receiving amounts of colors in which said CCD shift registers differ from each other.

5. The CCD image pick-up device as claimed in claim 1 wherein said common output circuit comprises a single charge-voltage conversion section for converting charges discharged into the output gates of said CCD shift registers into voltage in sequence and a single reset gate for resetting the charges accumulated in the output gates.

6. An image reader comprising:
a CCD image pick-up device comprising a plurality of CCD shift registers for discharging electric signals output from light receiving elements placed side by side in a row into output gates of said CCD shift registers in batch, and a common output circuit formed integrally with the output gates of said CCD shift registers for multiplexing the electric signals discharged into the output gates and outputting a resultant signal; and
control means for controlling the drive of the light receiving elements of said CCD shift registers at common timing, performing conduction control of the output gates and said common output circuit at separate and different timings, and performing reset control to form precharge components in each multiplexed electric signal output from said common output circuit by the conduction control.

7. An image reader comprising:
a CCD image pick-up device comprising a plurality of CCD shift registers for discharging electric signals output from light receiving elements placed side by side in a row into output gates of said CCD shift registers in batch, and a common output circuit formed integrally with the output gates of said CCD shift registers for multiplexing the electric signals discharged into the output gates and outputting the resultant signal; and
control means for controlling the drive of the light receiving elements of said CCD shift registers at separate and different timings, performing conduction control of the output gates and said common output circuit at common timing, and performing reset control to form precharge components in each multiplexed electric signal output from said common output circuit by the conduction control.

8. An image reader comprising:
a CCD image pick-up device comprising a plurality of CCD shift registers for discharging electric signals output from light receiving elements placed side by side like a row into output gates of said CCD shift registers in batch, and a common output circuit formed integrally with the output gates of said CCD shift registers for multiplexing the electric signals discharged into the output gates and outputting a resultant signal; and
an image conversion circuit for converting the multiplexed electric signal output from said common output circuit into image information, wherein
said image conversion circuit comprises an electronic circuit for converting each electric signal into a digital signal representing a difference value between precharge and signal components.

9. The image reader as claimed in claim 8 wherein said electronic circuit comprises a delay circuit for delaying the precharge component of the electric signal by a processing time interval of the subsequent signal component and a circuit for subtracting the delayed precharge component from the signal component and generating a digital signal representing a difference value.
